# EUROPEAN PATENT APPLICATION

(11) **EP 4 749 422 A1**
(43) Date of publication of application: **27.05.2026**
(21) Application number: 25216289.6
(22) Date of filing: 17.11.2025
(51) Int. Cl.: G06F 3/04847, G01M 17/02

(54) **TRANSIENT TIRE ENERGY DISSIPATION ANALYSIS**

(30) Priority: 21.11.2024 US 202463723394 P; 14.10.2025 US 202519357807
(71) Applicant: The Goodyear Tire & Rubber Company, Akron, OH 44316 (US)
(72) Inventor: KÖPPEN, Stefan Paul, L-7750 Colmar-Berg (LU); TREVIN, Yann, L-7750 Colmar-Berg (LU); BABELOT, Vincent Charles Louis, L-7750 Colmar-Berg (LU); KABINJA RWEMALIKA, Renaud, L-7750 Colmar-Berg (LU); MULLER, Philippe Joseph Auguste, B-6971 Champlon (BE)
(74) Representative: Kutsch, Bernd

(57) **Abstract**

A system and method for improving energy dissipation analysis of a tire by presenting transient rolling resistance relative to standard rolling resistance is disclosed. The system comprises: a computing device comprising a processor and a memory; and machine-readable instructions stored in the memory that, when executed by the processor, cause the computing device to at least: obtain rolling resistance data collected during a rolling resistance test of a tire, the rolling resistance data being collected during a warm-up period and a measurement period of the rolling resistance test; determine at least one transient indicator based at least in part on the rolling resistance data collected during the warm-up period of the rolling resistance; generate a user interface including at least one graphical representation associated with rolling resistance of the tire over a period of time, the at least one graphical representation comprising an energy dissipation graph illustrating the at least one transient indicator of the tire relative to a standard rolling resistance of the tire, the standard rolling resistance corresponding to the rolling resistance data collected during the measurement period; and cause the user interface to be rendered on a display device.

## Description

### BACKGROUND

The rolling resistance of a tire is the amount of energy that is needed to enable the tire to roll over a surface. Estimation or prediction of tire rolling resistance is important, as it enables prediction of the driving range of a vehicle. Estimation of tire rolling resistance also enables prediction of energy loss, including fuel consumption for internal combustion engines and battery consumption for electric vehicles. In addition, estimates of tire rolling resistance are employed in force allocation determinations, which may be useful in braking and other control systems of the vehicle.

### SUMMARY OF THE INVENTION

The invention relates to a system in accordance with claim 1 and to a method in accordance with claim 8.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a drawing of a network environment according to various embodiments of the present invention.
FIGS. 2A-2C are example pictorial diagrams of example user interfaces rendered in the network environment of FIG. 1 according to various embodiments of the present invention.
FIGS. 3A-3B are examples illustrations of the rolling resistance calculations according to various embodiments of the present invention.
FIG. 4 is an example graphical representation of an area under the curve associated with rolling resistance evolution according to various embodiments of the present invention.
FIG. 5 is a flowchart illustrating one example of functionality implemented as portions of an application executed in a computing environment in the network environment of FIG. 1 according to various embodiments of the present invention.

### DETAILED DESCRIPTION OF PREFERRED EMBODIMENTS OF THE INVENTION

Disclosed are various approaches for analyzing energy dissipation in tires based at least in part on transient rolling resistance indicators. In particular, the present invention introduces two transient indicators that can be used in addition to the standard rolling resistance coefficient for understanding energy dissipated by a given tire. The transient indicators correspond to a transient rolling resistance indicator and an area under the curve indicator. These indicators can correspond to the rolling resistance that occurs in a tire during a warm-up phase of the tire.

In various examples, a rolling resistance tool can be used to analyze the transient tire energy dissipation of the tire over various stages of a rolling resistance test. For example, a user interface of the rolling resistance test can be generated to include graphs illustrating the evolution of the rolling resistance during a rolling resistance test as well as illustrating transient rolling resistance relative to the standard rolling resistance coefficient that can be used to classify tires based on rolling resistance. A user can interact with the one or more graphs to view the transient rolling resistance over the entirety of the test. This can be helpful in situations where two different tires may have similar standard rolling resistance coefficients but differing transient rolling resistance coefficients. As such, one tire may exert less energy than another tire during the warm-up process which can be beneficial to the overall performance of the tire.

Estimates of tire rolling resistance can be determined through rolling resistance lab testing or other controlled environments. There are multiple standards for testing tire rolling resistance, such as, for example, International Organization for Standardization (ISO) 28580, ISO 18164, Standard of Automative Engineers SAE J1269, and SAE J2452. The tests can be used to classify tires according to a measured rolling resistance. The standard rolling resistance tests typically provide a list of parameters and settings that must be applied when running a rolling resistance test to create a controlled environment. The rolling resistance that is measured from these standard tests is associated with a measurement taken at the end of the test when the tire is considered to be warmed up. For example, for passenger vehicles, the ISO 28580 standard states that the warm-up period is thirty minutes and that a standard rolling resistance coefficient is to be calculated using the rolling resistance signal captured after the thirty minute warm-up period. However, rolling resistance directly affects fuel efficiency, electric vehicle range, and other factors. Accordingly, it can be beneficial to understand the transient rolling resistance of the tire that occurs during the warming up period to better understand the full amount of energy dissipated by the tire from a cold start until the standard measuring time.

**In** the following discussion, a general description of the system and its components is provided, followed by a discussion of the operation of the same. Although the following discussion provides illustrative examples of the operation of various components of the present invention, the use of the following illustrative examples does not exclude other implementations that are consistent with the principals disclosed by the following illustrative examples.

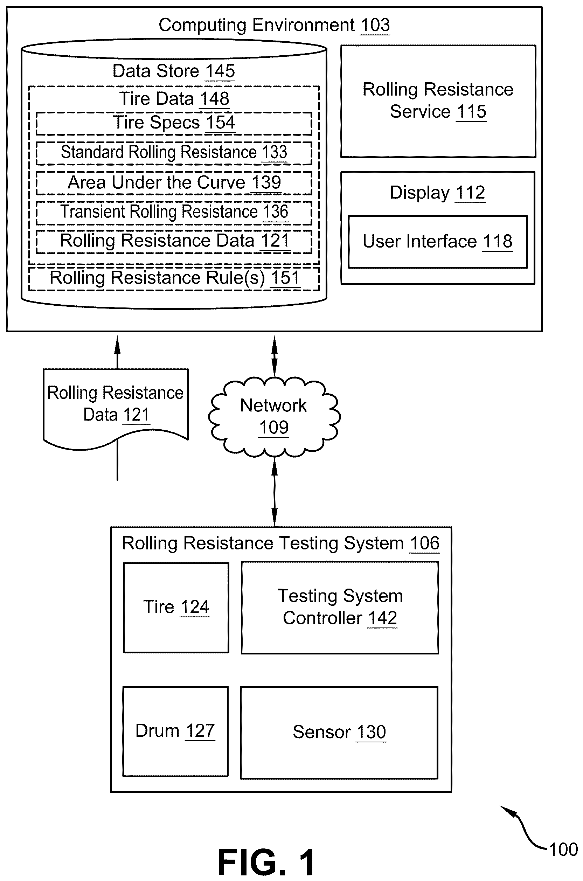

With reference to FIG. 1, shown is a network environment 100 according to various embodiments. The network environment 100 can include a computing environment 103, and a rolling resistance testing system 106, which can be in data communication with each other via a network 109.

The network 109 can include wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (i.e., WI-FI^{®}), BLUETOOTH^{®} networks, microwave transmission networks, as well as other networks relying on radio broadcasts. The network 109 can also include a combination of two or more networks 109. Examples of networks 109 can include the Internet, intranets, extranets, virtual private networks (VPNs), and similar networks.

The computing environment 103 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the computing environment 103 can employ a plurality of computing devices that can be arranged in one or more server banks or computer banks or other arrangements. Such computing devices can be located in a single installation or can be distributed among many different geographical locations. For example, the computing environment 103 can include a plurality of computing devices that together can include a hosted computing resource, a grid computing resource or any other distributed computing arrangement. In some cases, the computing environment 103 can correspond to an elastic computing resource where the allotted capacity of processing, network, storage, or other computing-related resources can vary over time.

**In** some examples, the computing environment 103 can include a processor-based system such as a computer system. Such a computer system can be embodied in the form of a personal computer (*e.g.,* a desktop computer, a laptop computer, or similar device), a mobile computing device (*e.g.,* personal digital assistants, cellular telephones, smartphones, web pads, tablet computer systems, music players, portable game consoles, electronic book readers, and similar devices), media playback devices (*e.g.,* media streaming devices, BluRay^{®} players, digital video disc (DVD) players, set-top boxes, and similar devices), a videogame console, or other devices with like capability. The computing environment 103 can include one or more displays 112, such as liquid crystal displays (LCDs), gas plasma-based flat panel displays, organic light emitting diode (OLED) displays, electrophoretic ink ("E-ink") displays, projectors, or other types of display devices. In some instances, the display 112 can be a component of the computing environment 103 or can be connected to the computing environment 103 through a wired or wireless connection.

Various applications or other functionality can be executed in the computing environment 103. The components executed on the computing environment 103 include a rolling resistance service 115, and other applications, services, processes, systems, engines, or functionality not discussed in detail herein.

In various examples, various applications, including the rolling resistance service 115 can be executed in the computing environment 103 to access network content served up by another computing environment or other servers, thereby rendering a user interface 118 on the display 112. To this end, the rolling resistance service 115 can include a browser, a dedicated application, or other executable, and the user interface 118 can include a network page, an application screen, or other user mechanism for obtaining user input.

In various examples, the rolling resistance service 115 can be executed to obtain rolling resistance data 121 from a rolling resistance testing system 106 performing a rolling resistance test of a tire 124 mounted on a testing wheel of the rolling resistance testing system 106. The rolling resistance data 121 can be used to calculate or otherwise determine the standard rolling resistance 133 along with two additional transient indicators. The two additional transient indicators can include transient rolling resistance 136 and area under the curve 139. The transient indicators can be used to better understand the rolling resistance of the tire 124 during the warm-up phase of a tire 124.

In various examples, a rolling resistance test being performed on the tire 124 can be executed according to a standard for testing tire rolling resistance (*e.g.*, ISO 28580, ISO 18164, SAE J1269, SAE J2452, *etc.).* The tests can be used to classify tires according to a measured rolling resistance. The standard rolling resistance tests typically provide a list of parameters and settings that must be applied when running a rolling resistance test to create a controlled environment. The rolling resistance that is measured from these standard tests is associated with a measurement taken at the end of the test when the tire is considered to be warmed up.

In various examples, when the tire 124 is mounted to the testing wheel, the tire 124 can interact with a rotating drum 127 that simulates a road surface. A testing system controller 142 of the rolling resistance testing system 106 can control the rotations of the rotating drum and tire 124 as well as a sensor 130 obtaining the rolling resistance data 121 during a rolling resistance test. The sensor 130 of the rolling resistance testing system 106 can measure the rolling resistance data 121 which can include data associated with the rolling resistance force of the tire 124 interacting with the surface of the drum. According to the ISO 28580 standard, the rolling resistance data 121 that is used to calculate or otherwise determine the standard rolling resistance 133 is measured during a measurement phase which is after a warm-up phase of thirty minutes for a passenger tire 124. **In** various examples, the rolling resistance service 115 can calculate the standard rolling resistance 133 based at least in part on the rolling resistance force measured in newtons (N) and the load on the tire 124. In other examples, the rolling resistance service 115 obtains the standard rolling resistance 133 from the rolling resistance data 121 that is obtained from the rolling resistance testing system 106 or otherwise stored in the data store 145.

**In** various examples, the rolling resistance service 115 determines values for a transient rolling resistance 136 and an area under the curve 139 using the rolling resistance data 121 measured during the warm-up phase and/or the measurement phase of the rolling resistance test. The transient rolling resistance 136 can correspond to the rolling resistance of the tire 124 at a given time during the rolling resistance test and is calculated based at least in part on the rolling resistance data 121 and the load on the tire. For example, the transient rolling resistance 136 can correspond to the rolling resistance data 121 that is measured during a particular period of time during the warm-up phase of the tire 124. In various examples, the transient rolling resistance 136 can correspond to a rolling resistance coefficient that is calculated using the rolling resistance force measured at a given time and the load on the tire 124 at the given time. As such, the transient rolling resistance 136 calculated at the end of the rolling resistance test should equal the standard rolling resistance 133 as they are both based on the rolling resistance of the tire 124 with respect to the drum 127 that is measured during the measurement phase of the rolling resistance test.

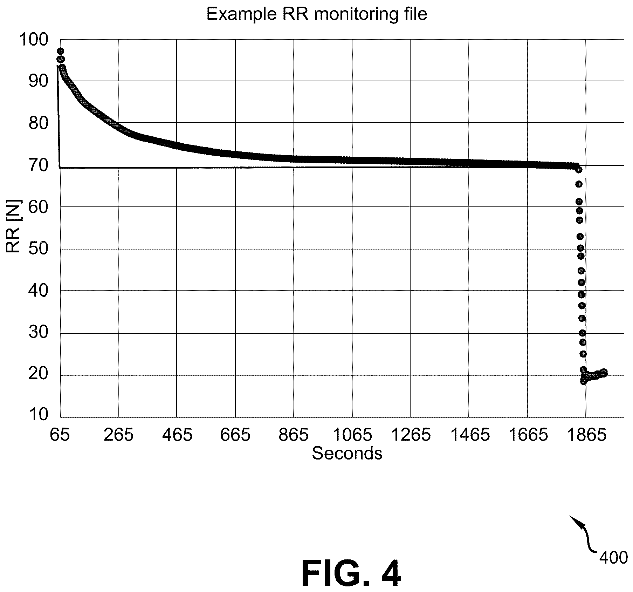

The area under the curve 139 corresponds to the amount energy dissipated by a tire 124 during warm-up over a period of time. As the rolling resistance is plotted on a graph over a period of time, the rolling resistance service 115 can calculate the area under the curve 139 according to the area under the rolling resistance evolution plot and a line at the RR signal during measurement phase as shown on the graph. FIG. 4 illustrates an example graph 400 illustrating the area under the curve 139 with respect to rolling resistance over a period of time. As the transient rolling resistance measurements evolve during the duration of a rolling resistance test, the area under the curve 139 measured at different points of time will change.

In various examples, the rolling resistance service 115 can generate a user interface 118 that can be rendered on a display 112 and can include one or more interactive graphical representations of the rolling resistance over a period of time. In various examples, the period of time can include any period of time within the range of the start of a rolling resistance test (e.g., warm up period) and an end of the rolling resistance test (e.g., measurement period). In various examples, the one or more graphical representations can correspond to the transient rolling resistance 136, area under the curve 138, and/or standard rolling resistances 133. Accordingly, a user interacting with the user interface 118 can view via the one or more interactive plots to understand the rolling resistance evolutions and energy dissipations associated with a given tire 124. The one or more interactive plots can be adjusted and updated over time in response to user interaction with one or more components to define the period of time that is being analyzed, the type of transient indicator being evaluated, the types of tires 124 being tested, tire sizes, tire lines, construction numbers, type of rolling resistance testing system 106, and/or other factors.

Also, various data is stored in a data store 145 that is accessible to the computing environment 103. The data store 145 can be representative of a plurality of data stores 145, which can include relational databases or non-relational databases such as object-oriented databases, hierarchical databases, hash tables or similar key-value data stores, as well as other data storage applications or data structures. Moreover, combinations of these databases, data storage applications, and/or data structures may be used together to provide a single, logical, data store. The data stored in the data store 145 is associated with the operation of the various applications or functional entities described below. This data can include tire data 148, rolling resistance rules 151, and potentially other data.

The tire data 148 can include information for a specific tire 124 subject to a rolling resistance test. For example, the tire data 148 can include tire specifications 154, rolling resistance data 121, standard rolling resistance 133, area under the curve 139, transient rolling resistance 136, and/or other data. The tire specifications 154 can include a tire identifier, manufacturing information for the tire 124 (e.g., manufacture name, tire model, *etc.),* tire size information (e.g., rim size, width, and outer diameter, *etc.),* manufacturing location, manufacturing date, a treadcap code that includes or correlates to a compound identification, a mold code that includes or correlates to a tread structure identification, and/or other information. The rolling resistance data 121 corresponds to the sensor data measured by the sensor 130 of the rolling resistance testing system 106. **In** particular, the sensor 130 is configured to measure the rolling resistance forces associated with the tire 124 interacting with the rotating drum 127 of the rolling resistance testing system 106. For example, the sensor 130 can comprise force and/or torque measurement sensors where the measurement is converted into rolling resistance in N.

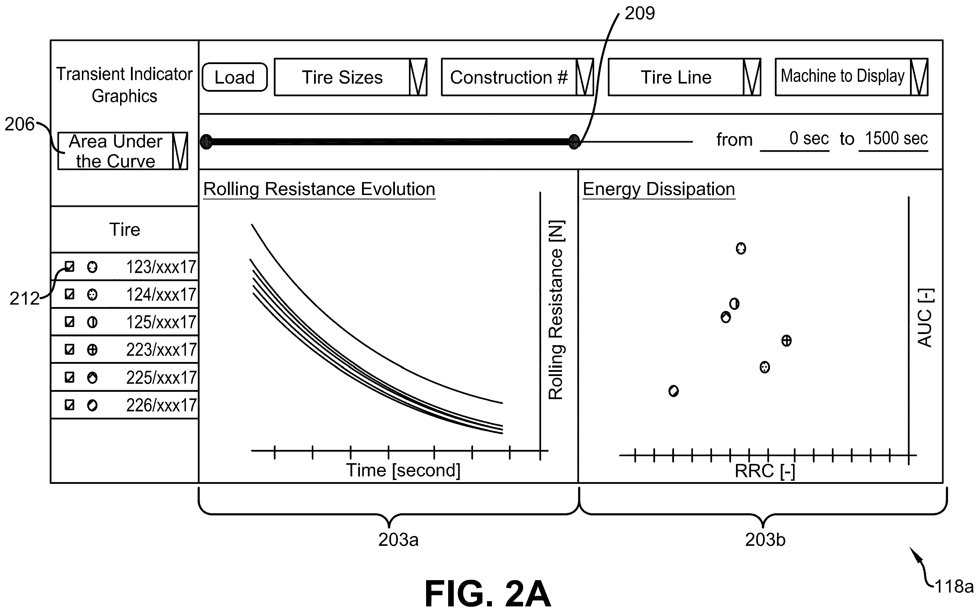

The standard rolling resistance 133 corresponds to the rolling resistance forces measured by the sensor 130 during the measurement phase of a rolling resistance test. The standard rolling resistance 133 is calculated using the rolling resistance data 121 corresponding to the measurement phase and the load on the tire 124. The area under the curve 139 corresponds to the amount of energy dissipated by a tire 124 during warm-up over a period of time. The period of time can include a range within a start of the rolling resistance test and an end of the rolling resistance test. **In** various examples, the time period for calculating the area under the curve 139 is based at least in part on the period of time between the start point and the end point of a sliding scale component 209 (FIGS. 2A-2C). The transient rolling resistance 136 can correspond to the rolling resistance of the tire 124 at a given time during the rolling resistance test and is calculated based at least in part on the rolling resistance data 121 and the load on the tire. For example, the transient rolling resistance 136 can correspond to the rolling resistance data 121 that is measured during a particular period of time during the warm-up phase of the tire 124. In various examples, the time period for calculating the transient rolling resistance 136 is based at least in part on the value of the end point selection of a sliding scale component 209. In various examples, the transient rolling resistance 136 can correspond to a rolling resistance coefficient that is calculated using the rolling resistance force measured at a given time and the load on the tire 124 at the given time.

The rolling resistance rules 151 include rules, models, and/or configuration data for the various algorithms or approaches employed by rolling resistance service 115, and/or other application or device. In some examples, the rolling resistance rules 151 can include the various models, formulas, equations, and/or algorithms for calculating the standard rolling resistances 133, the transient rolling resistance 136, and/or the area under the curve 139 based at least in part on the rolling resistance data 121 and/or other factors.

**It** should be noted that although the computing environment 103 is illustrated in FIG. 1 as being separate and distinct from the rolling resistance testing system 106, in some examples, one or more portions of the computing environment 103 can be included in the rolling resistance testing system 106 and/or vice versa. In addition, although the display 112 and user interface 118 are illustrated in FIG. 1 as being included in the computing environment 103, in some examples, the display 112 and user interface 118 can be included in a client device (not shown) that includes a client application that interacts with the rolling resistance service 115 to allow the user interface 118 to be rendered in the client device for user interaction.

Next, a general description of the operation of the various components of the network environment 100 is provided with regard to FIGS. 2A-5. To begin, FIGS. 2A -2C illustrate example user interface 118 (*e.g*., 118a, 118b, 118c) that can be generated by the rolling resistance service 115 and rendered on a display 112 of the computing environment 103 and/or client device. FIGS. 2A-2C each illustrate an example user interface 118 that include a rolling resistance evolution graph in a first user interface panel 203a and an energy dissipation graph in a second user interface panel 203b. In addition, the user interfaces 118 of FIGS. 2A-2C include a transient indicator component 206, a sliding scale component 209, one or more tire selection components 212 and various other selectable components that can be used to define the parameters to visually display in the first user interface panel 203a and the second user interface panel 203b.

The tire selection components 212 can be used to select which tested tires 124 should be represented in the rolling resistance evolution graph and energy dissipation graph. Accordingly, the user can select and/or deselect one or more tires 124 to review. In various examples, the corresponding tires 124 represented by the tire selection components 212 can be based at least in part on one or more tire specifications 154 (e.g., tire brand, tire size, construction number, tire line, *etc.).*

The rolling resistance evolution graph illustrates a graphical representation of the rolling resistance measured over a period of time. The period of time can be defined by the sliding scale component 209. For example, if a user wishes to view the rolling resistance evolution within the first twenty minutes of a rolling resistance test, the user can interact with the sliding scale component 209 to define the range of time relative to the rolling resistance test that they wish to view. The rolling resistance evolution graph can be updated based at least in part on the user interactions.

The energy dissipation graph illustrates a graphical representation of the standard rolling resistance coefficient (*e.g.*, rolling resistance obtained at the end of the rolling resistance test) relative to one of the transient indicators (*e.g.*, transient rolling resistance 136, area under the curve 139). In some examples, the rolling resistance coefficient can be corrected or correlated to a given reference to ensure proper data population comparison. Accordingly, the user can view the relationship between different tires and the varying energy dissipation of the tire 124 during various stages of the rolling resistance test. This graph can be useful in comparing different tires 124 that have similar standard rolling resistance coefficients 133 but differing transient coefficients. This representation is beneficial in selecting tires 124 by understanding the full amount of energy dissipated by the tire 124 from a cold start until the standard measuring time.

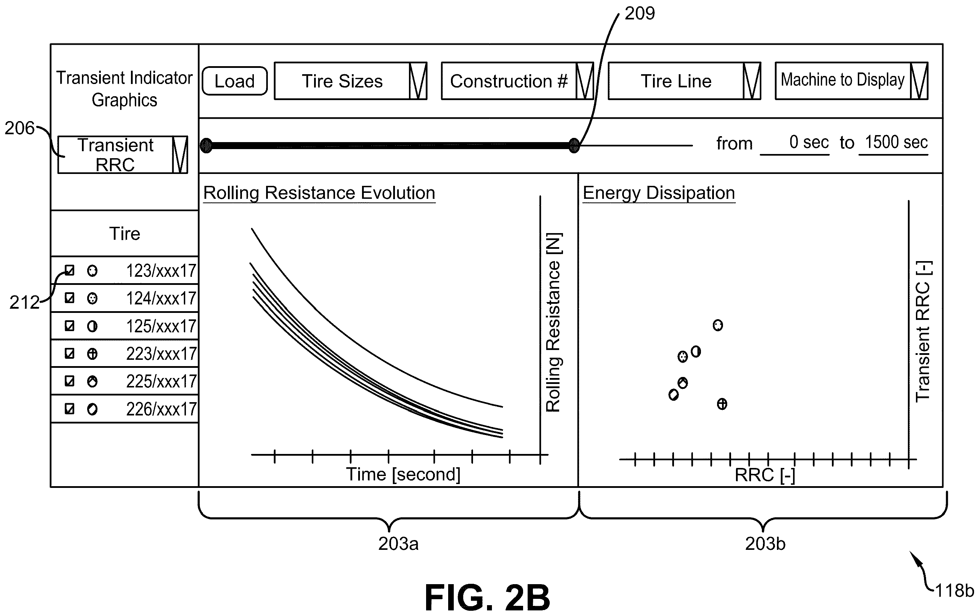

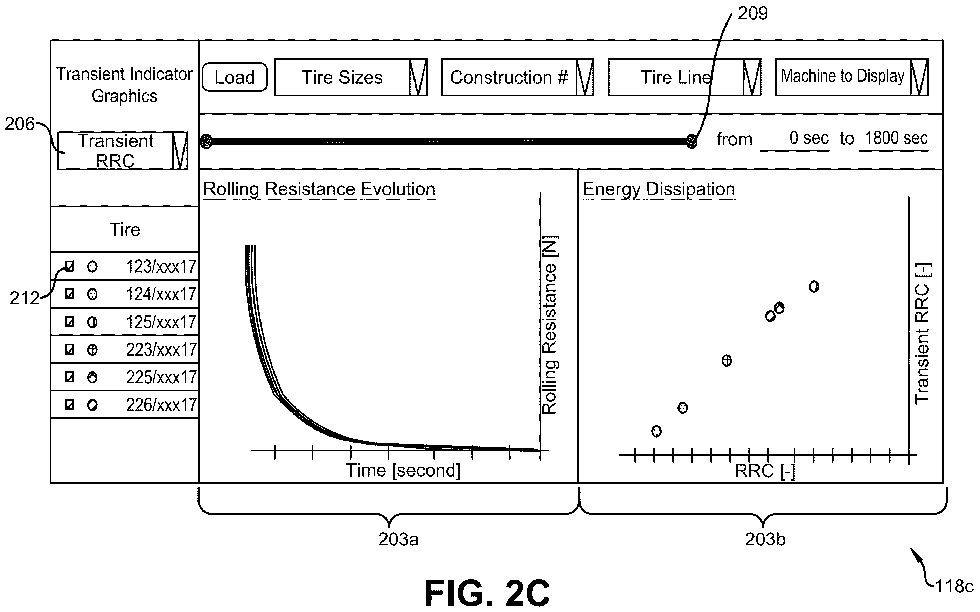

FIG. 2A and FIG. 2B illustrate examples plots corresponding to the same time defined by the sliding scale component 209. FIG. 2A differs from FIG. 2B with respect to the type of transient indicator being displayed. As shown in FIG. 2A, the transient indicator component 206 is selected to the area under the curve indicator. Accordingly, the energy dissipation graph in the second user interface panel 203 of the user interface 118a of FIG. 2A illustrates a graphical representation of the area under the curve 139 relative to a rolling resistance coefficient. **In** various examples, the time period for calculating the area under the curve 139 is based at least in part on the period of time between the start point and the end point of a sliding scale component 209. Conversely, in the user interface 118b of FIG. 2B, the energy dissipation graph in the second user interface panel 203b illustrates a graphical representation of the transient rolling resistance 136 relative to a standard rolling resistance coefficient. Indeed, the transient indicator component 206 is selected to "Transient RRC." In various examples, the time period for calculating the transient rolling resistance 136 is based at least in part on the value of the end point selection of a sliding scale component 209. FIG. 2C illustrates an example user interface 118 that represents the time at completion of the rolling resistance test and illustrates the transient rolling resistance coefficient. As illustrated in the second user interface panel 203b of FIG. 2C, the transient rolling resistance is about equal to the standard rolling resistance coefficient.

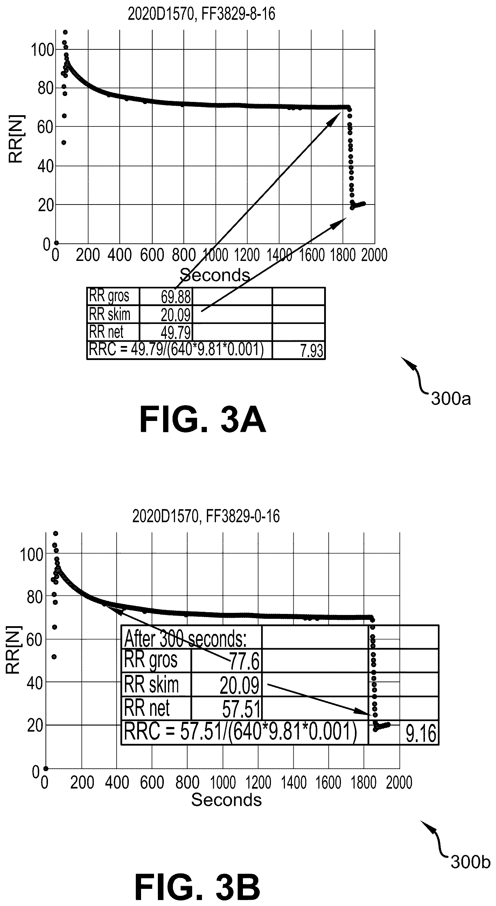

Turning now to FIGS. 3A-3B, shown example graphical representations 300 (e.g., 300a, 300b) of the transient rolling resistance 136 and calculations over a period of time according to various examples. For example, during the warm up period of a rolling resistance test, the transient rolling resistance 126 can be calculated using the rolling resistance data 121 obtained from the rolling resistance testing system 106 at a given time. To achieve optimum results it is recommended to operate the RR testing system continuously or to warm-it up sufficiently prior to a test. FIG. 3A illustrates the calculation of the transient rolling resistance calculation at the end of the test which would correspond to the standard rolling resistance coefficient 133. In particular, at the end of the test, the rolling resistance net amount is determined to be 49.79. Accounting for a load of 640 kilograms and gravity, the rolling resistance coefficient is calculated to be 7.93. However, as shown in FIG. 3B, the rolling resistant coefficient is greater during the warm-up phase and after 300 seconds of the rolling resistance test. In this example, the transient rolling resistance coefficient is calculated to be 9.16.

Turning now to FIG. 4, shown is an example graphical representation 400 illustrating the area under the curve that corresponds to the rolling resistance force measured during a rolling resistance test. The area under the curve 139 can be calculated by determining the area under the curve that is represented by the evolution of the rolling resistance force.

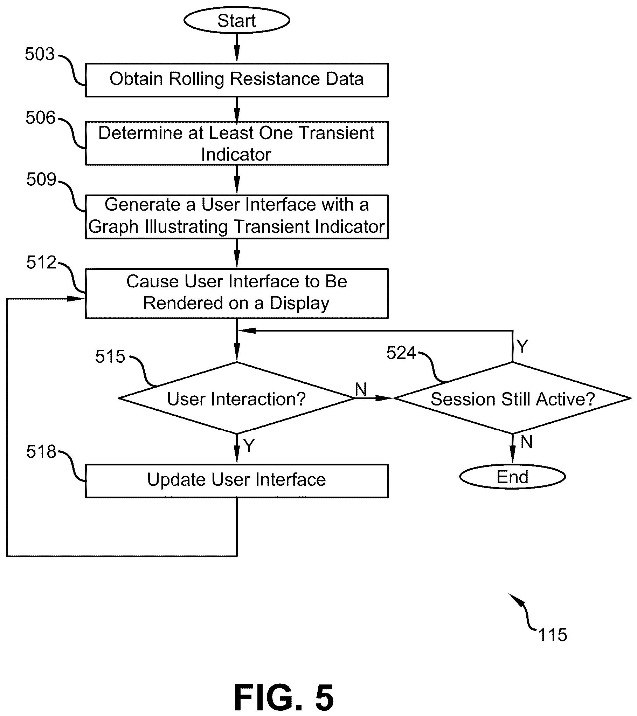

Referring next to FIG. 5, shown is a flowchart that provides one example of the operation of a portion of the rolling resistance service 115. The flowchart of FIG. 5 provides merely an example of the many different types of functional arrangements that can be employed to implement the operation of the depicted portion of the rolling resistance service 115. As an alternative, the flowchart of FIG. 5 can be viewed as depicting an example of elements of a method implemented within the network environment 100.

Beginning with block 503, the rolling resistance service 115 obtains the rolling resistance data 121 associated with the rolling resistance test of a tire 124. The rolling resistance data 121 can include force measurements obtained from a sensor 130 of a rolling resistance testing system 106 that correspond to the rolling resistance of a tire 124 engaging with a rotating drum 127. In some examples, the rolling resistance testing system 106 can send the rolling resistance data 121 to the rolling resistance service 115 as measurements are obtained during the timeline of a rolling resistance test. **In** other examples, the rolling resistance testing system 106 can send the rolling resistance data 121 at the completion of the rolling resistance test. In various examples, the rolling resistance data 121 can include time stamps for each obtained measurement.

At block 506, the rolling resistance service 115 can obtain at least one transient indicator. A transient indicator can include a transient rolling resistance coefficient 136 and/or an area under the curve indicator. The transient rolling resistance coefficient 136 can correspond to the rolling resistance of the tire 124 at a given time during the rolling resistance test and is calculated based at least in part on the rolling resistance data 121 and the load on the tire. The area under the curve 139 corresponds to the amount of energy dissipated by a tire 124 during warm-up over a period of time.

At block 509, the rolling resistance service 115 generates a user interface 118 or user interface code for generating a user interface 118 with at least one graphical representation illustrating the transient indicator. In various examples, the user interface can be generated to include a rolling resistance evolution graph in a first user interface panel 203a and an energy dissipation graph in a second user interface panel 203b. **In** addition, the user interfaces 118 can be generated to include a transient indicator component 206, a sliding scale component 209, one or more tire selection components 212 and various other selectable components that can be used to define the parameters to visually display in the first user interface panel 203a and the second user interface panel 203b.

According to various examples, the transient indicator components 206 can be interacted with by a user to define the type of transient indicator to display in the energy dissipation graph. For example, if the transient RRC indicator is selected, the energy dissipation graph will include a graphical representation of the transient rolling resistance 136 relative to the standard rolling resistance 133 for each tire type selected.

At block 512, the rolling resistance service 115 causes the user interface 118 to be rendered on a display 112 of the computing environment 103 or other client device. In some examples, the rolling resistance service 115 can render the user interface 118 and/or execute the user interface code to be rendered on the display of the computing environment 103. In one or more examples, the rolling resistance service 115 can transmit user interface code that is executable by a computing device to generate and render the user interface 118. In other examples, the rolling resistance service 115 can transmit the generated user interface 118 to the computing device for rendering.

At block 515, the rolling resistance service 115 determines if there is a user interaction with the user interface 118 in response to one or more user interactions with one or more user interface components. If a user interaction is detected, the rolling resistance service 115 proceeds to block 518. Otherwise, the rolling resistance service 115 process to block 524.

At block 518, the rolling resistance service 115 can update the user interface 118 and/or corresponding user interface code based at least in part on the user interaction. For example, if the user interaction is to the transient indicator component 206 changing the requested indicator from area under the curve 139 to transient rolling resistance 136, the rolling resistance service 115 can update the user interface or otherwise regenerate the user interface 118 to modify the second user interface panel 203b to replace the energy dissipation graph associated with the area under the curve 139 to the transient rolling resistance 136. Similarly, if the user interaction is to the sliding scale component 209, the rolling resistance service 115 can update the rolling resistance evolution graph in the first user interface panel 203a and the energy dissipation graph in the second user interface panel 203b based on the period of time defined by the sliding scale component 209. In other examples, the user interactions can correspond to the selection and/or deselection of tires that the user wishes to view the corresponding data of in the graphical representations. In this example, the user may wish to only view the data associated with two tires 124 instead of six tires 124 (or however many tires are available for selection to view). As such, the rolling resistance service 115 can update the user interface 118 and/or corresponding user interface code accordingly to display only the information selected by the user. The rolling resistance service 115 returns to block 512 to render the user interface 118.

At block 524, the rolling resistance service 115 determines if the session is still active. **If** the session is still active, the rolling resistance service 115 will return to block 515. If the session is no longer active (*e.g.*, the user has closed the window associated with the rolling resistance service 115), the process will proceed to completion.

## Claims

1. A system for improving energy dissipation analysis of a tire by presenting transient rolling resistance relative to standard rolling resistance, the system comprising:
a computing device comprising a processor and a memory; and
machine-readable instructions stored in the memory that, when executed by the processor, cause the computing device to at least:
obtain rolling resistance data collected during a rolling resistance test of a tire, the rolling resistance data being collected during a warm-up period and a measurement period of the rolling resistance test;
determine at least one transient indicator based at least in part on the rolling resistance data collected during the warm-up period of the rolling resistance;
generate a user interface including at least one graphical representation associated with rolling resistance of the tire over a period of time, the at least one graphical representation comprising an energy dissipation graph illustrating the at least one transient indicator of the tire relative to a standard rolling resistance of the tire, the standard rolling resistance corresponding to the rolling resistance data collected during the measurement period; and
cause the user interface to be rendered on a display device.

2. The system of claim 1, wherein the at least one indicator comprises at least one of a transient rolling resistance indicator or an area under the curve indicator.

3. The system of claim 1 or 2, wherein the user interface is generated to further include a transient indicator selection component facilitating a selection of the transient rolling resistance indicator or the area under the curve indicator for inclusion in the energy dissipation graph, and wherein, when executed, the machine-readable instructions further cause the computing device to at least update the energy dissipation graph in response to a user interaction with the transient indicator selection component.

4. The system of at least one of the previous claims, wherein the at least one graphical representation further includes a rolling resistance evolution graph illustrating a rolling resistance evolution of the tire based at least in part on the rolling resistance data collected over the period of time, and, optionally, wherein the rolling evaluation graph illustrates a plurality of rolling resistance evolutions associated with a plurality of different types of tires thereby presenting a visual comparison of individual rolling resistance evolutions associated with a respective tire of the plurality of different types of tires.

5. The system of at least one of the previous claims, wherein the energy dissipation graph presenting a visual comparison of the at least one transient indicator for a plurality of different types of tires with the standard rolling resistance for the plurality of different types of tires.

6. The system of at least one of the previous claims, wherein the user interface further includes a sliding scale component and, when executed, the machine-readable instructions further cause the computing device to update the user interface by updating the at least one graphical representation based at least in part on user interactions with the sliding scale component, the sliding scale component reducing or increasing the period of time being presented in the at least one graphical representation.

7. The system of at least one of the previous claims, wherein, when executed, the machine-readable instructions further cause the computing device to at least determine the standard rolling resistance coefficient based at least in part on the rolling resistance data collected at an end of the measurement period; and/or wherein, when executed, the machine readable instructions further cause the computing device to at least analyze energy dissipation of the tire during the warm-up period based at least in part on the at least one transient indicator.

8. A method for improving energy dissipation analysis of a tire by presenting transient rolling resistance relative to standard rolling resistance, the method comprising:
obtaining, by a computing device, rolling resistance data collected during a rolling resistance test of a tire, the rolling resistance data being collected during a warm-up period and a measurement period of the rolling resistance test;
determining, by the computing device, at least one transient indicator based at least in part on the rolling resistance data collected during the warm-up period of the rolling resistance test;
generating, by the computing device, a user interface including at least one graphical representation associated with rolling resistance of the tire over a period of time, the at least one graphical representation comprising an energy dissipation graph illustrating the at least one transient indicator of the tire relative to a standard rolling resistance coefficient of the tire, the standard rolling resistance coefficient corresponding to the rolling resistance data collected during the measurement period; and
causing, by the computing device, the user interface to be rendered on a display device.

9. The method of claim 8, wherein the at least one indicator comprises at least one of a transient rolling resistance indicator or an area under the curve indicator.

10. The method of claim 8 or 9, wherein the user interface is generated to further include a transient indicator selection component facilitating a selection of the transient rolling resistance indicator or the area under the curve indicator for inclusion in the energy dissipation graph, and further comprising updating the energy dissipation graph in response to a user interaction with the transient indicator selection component.

11. The method of at least one of the previous claims 8 to 10, wherein the at least one graphical representation further includes a rolling resistance evolution graph illustrating a rolling resistance evolution of the tire based at least in part on the rolling resistance data collected over the period of time, and, optionally, wherein the rolling evaluation graph illustrates a plurality of rolling resistance evolutions associated with a plurality of different types of tires thereby presenting a visual comparison of individual rolling resistance evolutions associated with a respective tire of the plurality of different types of tires.

12. The method of at least one of the previous claims 8 to 11, wherein the energy dissipation graph presenting a visual comparison of the at least one transient indicator for a plurality of different types of tires with the standard rolling resistance for the plurality of different types of tires.

13. The method of at least one of the previous claims 8 to 12, wherein the user interface further includes a sliding scale component and, further comprising updating the user interface by updating the at least one graphical representation based at least in part on user interactions with the sliding scale component, the sliding scale component reducing or increasing the period of time being presented in the at least one graphical representation.

14. The method of at least one of the previous claims 8 to 13, further comprising determining the standard rolling resistance coefficient based at least in part on the rolling resistance data collected at an end of the measurement period; and/or further comprising analyzing energy dissipation of the tire during the warm-up period based at least in part on the at least one transient indicator.

15. The method of at least one of the previous claims 8 to 14, wherein the rolling resistance test corresponds to an International Organization for Standardization (ISO) test for measuring rolling resistance of tires.
